# EUROPEAN PATENT SPECIFICATION

(11) **EP 4 092 390 B1**
(45) Date of publication and mention of the grant of the patent: **01.10.2025**
(21) Application number: 20907452.5
(22) Date of filing: 21.12.2020
(51) Int. Cl.: G01D 21/02, F23M 11/04, F23N 5/26, F23N 5/00, F23N 5/02, F23N 5/08, F23N 5/10

(54) **APPARATUS AND METHOD CAPABLE OF MONITORING AND ADJUSTING IN-FURNACE COMBUSTION CONDITION IN REAL TIME**
VORRICHTUNG UND VERFAHREN ZUR ÜBERWACHUNG UND EINSTELLUNG DES VERBRENNUNGSZUSTANDES IN EINEM OFEN IN ECHTZEIT
APPAREIL ET PROCÉDÉ PERMETTANT LA SURVEILLANCE ET LE RÉGLAGE D'UN ÉTAT DE COMBUSTION DANS UN FOUR EN TEMPS RÉEL

(30) Priority: 27.12.2019 CN 201911378911
(43) Date of publication of application: 23.11.2022
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: PAN, Yuejin, Shanghai 201108 (CN); ZHANG, Gang, Shanghai (CN); ZHOU, Wenbiao, Shanghai 201108 (CN); VAN KAMPEN, Peter, Shanghai 201108 (CN)
(74) Representative: Air Liquide
(86) International application number: PCT/CN2020/137960
(87) International publication number: WO 2021/129564

(56) References cited:
- EP-A1- 0 697 565
- WO-A1-2019/034283
- CN-A- 102 138 051
- CN-A- 103 424 005
- CN-A- 104 471 079
- CN-A- 104 848 247
- CN-A- 111 121 872
- ES-B1- 2 201 885
- US-B1- 6 190 160
- US-B1- 6 247 416

## Description

### Technical Field

The present invention belongs to the field of combustion, and relates to an apparatus and method for monitoring and adjusting the combustion conditions in a furnace.

### Background Art

Combustion has a wide range of applications in industry, e.g. the melting of metals, including aluminum, copper, lead, etc., or the incineration of waste containing organic matter. This type of combustion is generally carried out in an industrial combustion furnace. By feeding oxygen-containing gas, or fuel and oxygen-containing gas together, into the combustion furnace, a flame and a large amount of heat are generated. Since the composition and quality of the raw materials fed into the furnace often change, the combustion conditions in the furnace will also change accordingly. For example, when metal is melted, additives such as coal are sometimes added to the metal raw materials; paint, coatings and residue, etc. on cans contain a large amount of carbon; and various components in waste also contain a large amount of carbon. When these combustible carbon-containing compounds are exposed to an oxidant during the operation of the furnace, they will react to produce a large amount of carbon monoxide. This phenomenon is called carbon monoxide release. When the carbon monoxide further comes into contact with the oxidant, it will produce carbon dioxide and release a lot of heat. In the combustion furnace, in addition to the oxygen-enriched air introduced into the furnace cavity or heating chamber through the burner, fresh air is also introduced into the flue gas duct or exhaust gas stream duct. Therefore, if carbon monoxide enters the exhaust gas stream duct, it will come into contact with the fresh air and burn, producing carbon dioxide and at the same time releasing a lot of heat, which can increase the temperature of the exhaust gas stream by 300° C or more. Such combustion caused by the contact between carbon monoxide and oxidant in the flue gas duct or exhaust gas stream duct is called post-combustion.

The amounts of fuel and oxygen-containing gas fed into the burner generally satisfy the stoichiometric ratio of oxygen required to achieve full combustion of the fuel, so that both the fuel and the oxygen are fully utilized. When the raw materials contain a large amount of carbon-containing materials, the combustion thereof with oxygen will consume oxygen, so that the fuel cannot be fully burned, resulting in waste of the fuel. Therefore, many methods have been disclosed in the prior art to monitor changes in the atmosphere in the combustion furnace and perform prompt adjustment of the flow rates of fuel and oxygen-containing gas.

CN103424005B has disclosed a method for heating metal raw materials in a combustion furnace; this includes installing at least one optical sensor in a heating chamber and/or exhaust gas stream to monitor the intensity of combustion, monitoring the variation dT/dt of the temperature T of the exhaust gas stream with time, and adjusting the fuel: oxygen ratio according to the results of monitoring. This method requires measurement of the temperature change with respect to time, which increases the complexity and cost of the sensor and control equipment thereof.

EP-A-0697565 discloses a method for controlling and monitoring the combustion of a combustion system with a burner and at least one actuator controlling the air supply to the burner. In order to detect carbon monoxide in the exhaust gas, the proportion of oxygen contained in the exhaust gas is recorded using at least two different measuring methods. The associated numerical values are calculated from the measuring signals obtained with two different measuring methods. When a relative deviation between these two values exceeds a specified limit value, this is used as an indication of the presence of carbon monoxide in the exhaust gas and the air supply to the burner of the combustion system is regulated until the relative deviation between the calculated values is below the specified limit value.

US8,721,764B has disclosed a method for melting metal in a combustion furnace, which includes measuring the temperature of flue gas at a predetermined time frequency downstream of the post-combustion region in the flue, and comparing this temperature with a threshold. When the value is greater than the threshold, the ratio of the fuel flow to the oxygen-containing gas flow is reduced so that the combustion furnace enters a reducing operating state. The accuracy of this method depends on the accuracy with which the threshold is determined. US 6,247,416 B1 discloses a furnace having the features of the preamble of claim 1.

In view of the above, the question of how to design an apparatus and method for real-time monitoring and adjustment of the combustion conditions in furnace to eliminate the above-mentioned defects and deficiencies in the prior art is an issue that urgently needs to be solved by the associated technicians in the industry.

### Summary of the Invention

In order to overcome the above-mentioned technical problems in the prior art, the present invention provides an economical, convenient and accurate apparatus and method for real-time monitoring and adjustment of combustion conditions in a furnace.

The present invention discloses an apparatus according to claim 1.

In an embodiment, the exhaust gas stream port is located on a chamber wall of the heating chamber, and a gap exists between the exhaust gas stream port and the exhaust gas stream duct, or the exhaust gas stream duct is built of a refractory material by masonry, and air can enter the exhaust gas stream duct through gaps in the refractory material.

The present invention also discloses a method for heating a raw material in the apparatus of claim 1, the method being defined in claim 4.

In the method described above, air enters the exhaust gas stream duct through a gap between the exhaust gas stream port and the exhaust gas stream duct, or when the exhaust gas stream duct is built of a refractory material by masonry, air enters the exhaust gas stream duct through gaps in the refractory material.

In the method described above, the raw material comprises one of, and/or a mixture of more than one of, iron-containing, copper-containing, aluminum-containing and/or other-metal-containing materials, or the raw material comprises waste.

In the method described above, the oxygen-containing gas contains at least 80% oxygen by mole percent.

In the method described above, the fuel comprises one of, or a mixture of more than one of, natural gas, other hydrocarbons and petroleum coke.

In the method described above, the furnace comprises a rotary furnace, a reverberatory furnace and/or a shaft furnace.

In the method described above, the combustion conditions in the furnace comprise:
a) a reducing atmosphere when the actual content of oxygen in the furnace is less than the oxygen content theoretically required to achieve full combustion of combustible carbon-containing compounds in the furnace; or
b) a neutral atmosphere when the actual content of oxygen in the furnace is approximately equal to the oxygen content theoretically required to achieve full combustion of combustible carbon-containing compounds in the furnace; or
c) an oxidizing atmosphere when the actual content of oxygen in the furnace is higher than the oxygen content theoretically required to achieve full combustion of combustible carbon-containing compounds in the furnace.

In one aspect of the method described above, when both sensors are flame sensors,
a) if both flame sensors detect a flame, it is inferred that the atmosphere in the furnace is a reducing atmosphere;
b) if the first flame sensor close to the exhaust gas stream port detects a flame at regular time intervals, but the second flame sensor remote from the exhaust gas stream port does not detect a flame, it is inferred that the atmosphere in the furnace is a neutral atmosphere; or
c) if neither of the two flame sensors detects a flame, it is inferred that the atmosphere in the furnace is an oxidizing atmosphere.

In another aspect of the method described above, when both sensors are pressure sensors,
a) if the pressure detected by the first pressure sensor close to the exhaust gas stream port is approximately equal to the pressure detected by the second pressure sensor remote from the exhaust gas stream port, it is inferred that the atmosphere in the furnace is a neutral or oxidizing atmosphere; or
b) if the pressure detected by the first pressure sensor close to the exhaust gas stream port is lower than the pressure detected by the second pressure sensor remote from the exhaust gas stream port, it is inferred that the atmosphere in the furnace is a reducing atmosphere.

In the method described above, when both sensors are oxygen concentration sensors,
a) if the oxygen concentration detected by the first oxygen concentration sensor close to the exhaust gas stream port is lower than a theoretical value for a neutral atmosphere but higher than the oxygen concentration detected by the second oxygen concentration sensor remote from the exhaust gas stream port, it is inferred that the atmosphere in the furnace is a reducing atmosphere;
b) if the oxygen concentration detected by the first oxygen concentration sensor close to the exhaust gas stream port is equal to the theoretical value for a neutral atmosphere, and slightly higher than the oxygen concentration detected by the second oxygen concentration sensor remote from the exhaust gas stream port, it is inferred that the atmosphere in the furnace is a neutral atmosphere and post-combustion occurs between the two oxygen concentration sensors; or
c) if the oxygen concentrations detected by the two oxygen concentration sensors are both higher than the theoretical value for a neutral atmosphere, it is inferred that the atmosphere in the furnace is an oxidizing atmosphere.

In another aspect of the method described above, when both sensors are carbon monoxide concentration sensors,
a) if the carbon monoxide concentration detected by the first carbon monoxide concentration sensor close to the exhaust gas stream port is higher than the carbon monoxide concentration detected by the second carbon monoxide concentration sensor remote from the exhaust gas stream port, it is inferred that the atmosphere in the furnace is a reducing atmosphere;
b) if the carbon monoxide concentration detected by the first carbon monoxide concentration sensor close to the exhaust gas stream port is equal to a theoretical value for a neutral atmosphere, and slightly higher than the carbon monoxide concentration detected by the second carbon monoxide concentration sensor remote from the exhaust gas stream port, it is inferred that the atmosphere in the furnace is a neutral atmosphere and post-combustion occurs between the two carbon monoxide concentration sensors; or
c) if both carbon monoxide concentration sensors detect almost no carbon monoxide, it is inferred that the atmosphere in the furnace is an oxidizing atmosphere.

In another aspect of the method described above, when both sensors are carbon dioxide concentration sensors,
a) if the carbon dioxide concentration detected by the first carbon dioxide concentration sensor close to the exhaust gas stream port is lower than the carbon dioxide concentration detected by the second carbon dioxide concentration sensor remote from the exhaust gas stream port, it is inferred that the atmosphere in the furnace is a reducing atmosphere;
b) if the carbon dioxide concentration detected by the first carbon dioxide concentration sensor close to the exhaust gas stream port is equal to a theoretical value for a neutral atmosphere, and slightly lower than the carbon dioxide concentration detected by the second carbon dioxide concentration sensor remote from the exhaust gas stream port, it is inferred that the atmosphere in the furnace is a neutral atmosphere and post-combustion occurs between the two carbon dioxide concentration sensors; or
c) if the carbon dioxide concentrations detected by the two carbon dioxide concentration sensors are approximately equal, it is inferred that the atmosphere in the furnace is an oxidizing atmosphere.

In another aspect of the method described above, the control device realizes an ideal atmosphere in the heating chamber by adjusting the amount of fuel and/or oxygen-containing gas entering the burner, according to the inferred atmosphere state in the heating chamber and/or whether post-combustion occurs in the exhaust gas stream duct.

Compared with the prior art, the technical solution provided in the present invention has the following advantages:
1. It is suitable for all kinds of combustion furnaces and all kinds of raw materials.
2. It can detect various atmosphere conditions in the combustion furnace, not being limited to reducing atmospheres or oxidizing atmospheres.
3. The sensors and control device are structurally simple and low-priced.
4. The in-furnace atmosphere is adjusted on the basis of a comparison of the measured values of two sensors of the same type. There is no need for a complicated calibration process or theoretical calculations, so the technical solution is more direct, accurate and convenient.

### Brief Description of the Drawings

Further understanding of the advantages and spirit of the present invention can be gained through the following detailed description of the invention and the accompanying drawings.

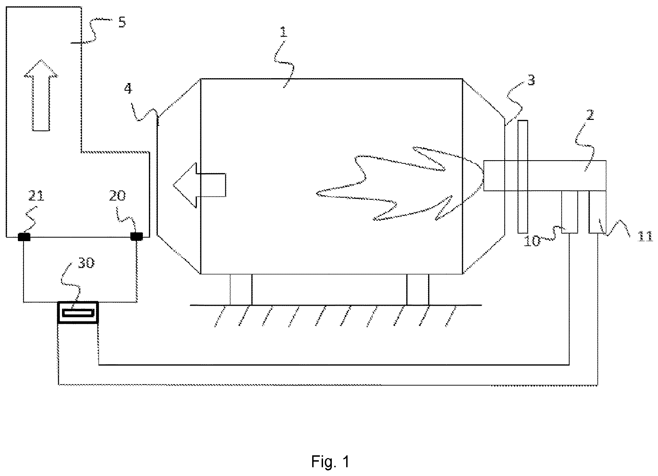

Fig. 1 is a schematic diagram of the structure of the apparatus provided by the present invention.

In the figure: 1 - heating chamber; 2 - burner; 3 - loading gate; 4 - exhaust gas stream port; 5 - exhaust gas stream duct; 10 - oxygen-containing gas pathway; 11 - fuel pathway; 20 - first sensor; 21 - second sensor; 30 - control device.

### Preferred Embodiments of the Invention

Specific embodiments of the present invention are explained in detail below in conjunction with the accompanying drawings. However, the present invention should be understood to not be limited to embodiments such as those described below, and the technical concept of the present invention may be implemented in combination with other well-known technologies or other technologies having the same function as those well-known technologies.

In the description of the following specific embodiments, in order to clearly demonstrate the structure and manner of operation of the present invention, many directional words will be used for description, but words such as "front" , "rear" , "left", "right", "outer" , "inner" , "outward" , "inward", "axial" and "radial" should be understood as being terms for convenience rather than restrictive terms.

In the description of the specific embodiments below, it should be understood that the orientational or positional relationships indicated by the terms "length" , "width" , "upper" , "lower" , "front" , "rear" , "left" , "right" , "vertical" , "horizontal" , "top" , "bottom" , "inner" and "outer" , etc. are based on the orientational or positional relationships shown in the drawings, and are merely intended to facilitate description of the present invention and simplify the description, rather than indicating or implying that the apparatus or element referred to must have a specific orientation and be constructed and operated in a specific orientation, and therefore are not understood as being a limitation of the present invention.

In the present invention, unless otherwise clearly specified and defined, terms such as "installed", "connected together", "connected" and "fixed" should be understood in a broad sense, e.g. may mean connected in a fixed manner, but may also mean removably connected, or forming a single piece; may mean mechanically connected, but may also mean electrically connected; may mean directly connected together, but may also mean connected indirectly via an intermediate medium; and may mean internal communication between two elements, or an interactive relationship between two elements. Those skilled in the art can understand the specific meaning of the above terms in the present invention according to the specific circumstances.

Unless clearly indicated otherwise, each aspect or embodiment defined here can be combined with any other aspect(s) or embodiment(s). In particular, any preferred or advantageous feature indicated can be combined with any other preferred or advantageous feature indicated.

The combustion furnace in the present invention includes various types of furnace conventionally used in industry, such as a rotary furnace, also called a rotary drum furnace, or a reverberatory furnace, a shaft furnace, and the like. An appropriate furnace is chosen according to the type of raw material to be heated, cost considerations, and pollutant emission standards, etc. The region in the combustion furnace where the raw materials are heated and melted is the heating chamber. The burner extends into the heating chamber, and generates a flame in the heating chamber by inputting oxygen-containing gas, or oxygen-containing gas and fuel. The heat generated by the flame can melt metal and incinerate organic matter.

The flow rates of fuel and oxygen-containing gas passed into the burner are adjustable. If there are no other combustible substances in the heating chamber, the ratio of fuel to oxygen-containing gas can be adjusted so that the molar ratio of fuel to oxygen in the heating chamber satisfies the stoichiometric ratio for combustion of the fuel and oxygen. In such circumstances, the fuel and oxygen are completely burned. In theory, there will be no residual oxygen or fuel, and the atmosphere in the furnace is neutral. If the molar ratio of oxygen to fuel in the heating chamber exceeds the stoichiometric ratio for combustion of the fuel and oxygen, then the fuel is completely consumed, there is residual oxygen in the heating chamber, and the atmosphere in the furnace is an oxidizing atmosphere. If the molar ratio of oxygen to fuel in the heating chamber is less than the stoichiometric ratio for combustion of the fuel and oxygen, theoretically the oxygen is completely consumed, there is residual fuel and/or carbon monoxide in the heating chamber, and the atmosphere in the furnace is a reducing atmosphere.

Even if the ratio of fuel and oxygen-containing gas fed into the heating chamber satisfies the stoichiometric ratio for combustion of the fuel and oxygen-containing gas, it is not possible to guarantee that the atmosphere in the furnace is always a neutral atmosphere. This is due to the presence of impurities in the raw materials, and the contents and types of impurities in different batches of raw materials entering the heating chamber are often different. Taking the melting of recycled metal as an example, metal cans often have impurities such as coatings, paint, content residue, and plastics. Combustible carbon-containing components in these impurities will burn to produce carbon monoxide when they come into contact with oxygen at high temperatures. As a result, oxygen is consumed, so there is insufficient oxygen for complete combustion with fuel, and the main components in the furnace are excess fuel and generated carbon monoxide. Such an atmosphere is called a reducing atmosphere. If it is necessary to adjust the atmosphere in the furnace to a neutral atmosphere, the amount of fuel fed into the heating chamber can be reduced or the amount of oxygen fed into the heating chamber can be increased.

Although a neutral atmosphere can utilize the fuel and oxygen-containing gas fed into the heating chamber to the maximum extent, a neutral atmosphere is not always suitable from the perspective of raw material processing. For example, aluminum oxidizes easily; in order to avoid the loss of raw material, a reducing atmosphere should be maintained in the heating chamber. As another example, when waste is incinerated, most of the waste is combustible material. In such circumstances, it is possible to feed less fuel or no fuel into the heating chamber, and only feed in oxygen, thereby creating an oxidizing atmosphere in the heating chamber. If the metal being melted is a metal that is not easily oxidized such as copper or lead, a neutral atmosphere can be maintained in the heating chamber to avoid wasting fuel or oxygen. It can be seen that it is absolutely necessary to monitor the atmosphere in the heating chamber in real time, and adjust the flow rate of fuel or oxygen-containing gas as needed in order to achieve a suitable in-furnace atmosphere.

Gases generated in the heating chamber enter an exhaust gas stream duct through an exhaust gas stream port. There are various designs of exhaust gas stream duct. For example, there is a gap between the exhaust gas stream port and exhaust gas stream duct of a rotary furnace; a suction fan is installed in the exhaust gas stream duct to suck fresh air from the gap into the exhaust gas stream duct in order to cool the high-temperature exhaust gas stream. The exhaust gas stream ducts of reverberatory furnaces and other furnaces are seamlessly connected to the exhaust gas stream ports, and the exhaust gas stream ducts are built of a refractory material by masonry; the pressure difference between the inside and outside of the ducts allows fresh air to penetrate into the ducts through gaps in the refractory material, and this can also have the effect of cooling the high-temperature exhaust gas stream. However, if the atmosphere in the furnace is a reducing atmosphere, the exhaust gas stream contains a large amount of carbon monoxide. When carbon monoxide at a high temperature encounters fresh air containing oxygen in the exhaust gas stream duct, it will burn to produce carbon dioxide. Such combustion occurs in the exhaust gas stream duct outside the heating chamber, and is called post-combustion. Post-combustion releases a lot of heat, which might cause aging of and damage to the exhaust gas stream duct. It can be concluded from the presence of post-combustion that the exhaust gas stream contains a large amount of carbon monoxide, and it can be further concluded that the atmosphere in the heating chamber is a reducing atmosphere.

A sensor is an element that measures a particular set parameter, converts it to an electrical signal, and then transmits this signal to a control device by a wireless and/or wired method. Sensors suitable for the present invention include flame sensors, pressure sensors, oxygen concentration sensors, carbon monoxide concentration sensors, carbon dioxide concentration sensors, and the like. The sensor can be conventionally selected from various commercially available models as required. The control device receives the signal from the sensor and makes a logical judgment as to whether to adjust the flow rates of fuel and oxygen-containing gas, and on the basis of this judgment, adjusts the flow rates of fuel and/or oxygen-containing gas accordingly. An example of a suitable control device is a programmable logic controller (PLC).

Fig. 1 describes an embodiment of the present invention. A burner 2 and a loading gate 3 are installed at one end of the heating chamber 1; raw material to be heated enters the heating chamber 1 through the loading gate 3. An oxygen-containing gas pathway 10 and a fuel pathway 11 are provided in the burner 2; fuel and oxygen-containing gas form a flame in the heating chamber 1. Gas in the heating chamber 1 exits from an exhaust gas stream port 4. In this embodiment, there is a gap between the exhaust gas stream port 4 and an exhaust gas stream duct 5, to allow fresh air to enter the exhaust gas stream duct 5. Two sensors of the same type are provided in the exhaust gas stream duct 5. Of these, a first sensor 20 is arranged close to the exhaust gas stream port 4; data measured by the first sensor essentially reflects the nature of gas that has just left the interior of the heating chamber. A second sensor 21 is arranged 5 - 10 meters downstream of the first sensor; the exact position is determined through experiment or experience, the aim being to arrange the second sensor downstream of possible post-combustion. If there is post-combustion in the exhaust gas stream duct, data measured at the position of the second sensor 21 reflects the nature of gas after combustion has occurred. The two sensors transmit measured signals to a control device 30, and the control device 30 adjusts the flow rate of fuel and/or oxygen-containing gas according to the difference between the signals of the two sensors, thus achieving the objective of changing the atmosphere in the heating chamber.

Specifically, the two sensors can both be flame sensors. Commonly used flame detection sensors include ultraviolet and infrared flame detection sensors, both of which can detect the intensity of radiation in a specific wavelength range, and convert this to an electrical signal. In the present invention, an ultraviolet flame detection sensor is generally selected according to the nature of the flame; the flame detection sensor only needs to detect whether a flame is present, without needing to detect the intensity of the flame. When there is a reducing atmosphere in the heating chamber, the exhaust gas stream contains a large amount of carbon monoxide which, after entering the exhaust gas stream duct, comes into contact with fresh air and burns, producing a flame. At this time, the two sensors arranged in the exhaust gas stream duct can both detect the flame. If the atmosphere in the heating chamber is neutral, the ratio of oxygen to fuel is essentially able to ensure complete combustion of the fuel. However, every time the loading gate 3 is opened to add raw material, some carbon-containing impurities are inevitably introduced into the heating chamber, and these impurities will burn with oxygen to produce carbon monoxide. Therefore, as the loading gate is periodically opened, gusts of carbon monoxide are also periodically released in the heating chamber. Immediately after entering the exhaust gas stream duct, the carbon monoxide mixes with fresh air and burns; therefore, the first flame sensor arranged at the exhaust gas stream port will detect a flame at the time intervals at which the loading gate is opened. Because the concentration of carbon monoxide in the neutral atmosphere will not be too high, it burns almost completely at the exhaust gas stream port, and the second flame sensor located deep inside the exhaust gas stream duct will not detect a flame. When the heating chamber is an oxidizing atmosphere, there is no incompletely burned carbon monoxide in the exhaust gas stream, and no post-combustion will occur in the exhaust gas stream duct, so neither of the two flame detection sensors can detect a flame.

Optionally, both sensors are pressure sensors. Suitable pressure sensors include pressure transmitters. When there is a reducing atmosphere in the heating chamber, the exhaust gas stream contains a large amount of carbon monoxide which, after entering the exhaust gas stream duct, comes into contact with fresh air and burns. The combustion causes the gas to expand, the temperature rises, and the gas pressure rises correspondingly. At this time, the second pressure sensor arranged deep down the exhaust gas stream duct detects the pressure of the gas after post-combustion, and this pressure should be higher than the pressure of the gas before post-combustion detected by the first pressure sensor located at the exhaust gas stream port. When there is an oxidizing or neutral atmosphere in the heating chamber, no post-combustion will occur in the exhaust gas stream duct, so the pressures detected by the two pressure sensors are approximately equal.

Both sensors can also be oxygen concentration sensors. When combustion in the heating chamber only occurs in a stoichiometric ratio between oxygen and fuel, there is still a residual concentration of oxygen in the heating chamber, and this is the theoretical oxygen value for a neutral atmosphere. When there is a reducing atmosphere in the heating chamber, this means that a greater amount of oxygen is consumed by combustion with carbon-containing impurities. In such circumstances, the oxygen concentration detected by the first oxygen concentration sensor located at the exhaust gas stream port is lower than the theoretical oxygen value for a neutral atmosphere, and because post-combustion in the exhaust gas stream duct continues to consume oxygen, the oxygen concentration detected by the second oxygen concentration sensor located deep down the exhaust gas stream duct is further reduced. When the atmosphere in the heating chamber is neutral, the oxygen concentration detected by the first oxygen concentration sensor is approximately equal to the theoretical oxygen value for a neutral atmosphere; if a small amount of post-combustion occurs in the exhaust gas stream duct and oxygen thus continues to be consumed, the oxygen concentration detected by the second oxygen concentration sensor is further reduced. When there is an oxidizing atmosphere in the heating chamber, the oxygen concentrations detected by both oxygen concentration sensors are greater than the theoretical oxygen value for a neutral atmosphere.

Both sensors can also be carbon monoxide concentration sensors. When combustion in the heating chamber only occurs in a stoichiometric ratio between oxygen and fuel, the carbon monoxide in the heating chamber has a reference concentration, which is the theoretical carbon monoxide value for a neutral atmosphere. When there is a reducing atmosphere in the heating chamber, post-combustion occurs in the exhaust gas stream duct, and consumes carbon monoxide. Therefore, the carbon monoxide concentration detected by the first carbon monoxide concentration sensor located at the exhaust gas stream port is higher than the carbon monoxide concentration detected by the second carbon monoxide concentration sensor located deep down the exhaust gas stream duct. When the atmosphere in the heating chamber is neutral, the carbon monoxide concentration detected by the first carbon monoxide concentration sensor is approximately equal to the theoretical carbon monoxide value for a neutral atmosphere; if a small amount of post-combustion occurs in the exhaust gas stream duct and carbon monoxide thus continues to be consumed, the carbon monoxide concentration detected by the second carbon monoxide concentration sensor is further reduced. When there is an oxidizing atmosphere in the heating chamber, the carbon monoxide in the heating chamber reacts with oxygen to produce carbon dioxide, and the two carbon monoxide concentration sensors detect almost no carbon monoxide.

Both sensors can also be carbon dioxide concentration sensors. When combustion in the heating chamber only occurs in a stoichiometric ratio between oxygen and fuel, the carbon dioxide in the heating chamber has a reference concentration, which is the theoretical carbon dioxide value for a neutral atmosphere. When there is a reducing atmosphere in the heating chamber, post-combustion occurs in the exhaust gas stream duct, consuming carbon monoxide and producing carbon dioxide. Therefore, the carbon dioxide concentration detected by the first carbon dioxide concentration sensor located at the exhaust gas stream port is lower than the carbon dioxide concentration detected by the second carbon dioxide concentration sensor located deep down the exhaust gas stream duct. When the atmosphere in the heating chamber is neutral, the carbon dioxide concentration detected by the first carbon dioxide concentration sensor is approximately equal to the theoretical carbon dioxide value for a neutral atmosphere. If a small amount of post-combustion occurs in the exhaust gas stream duct and carbon dioxide thus continues to be produced, the carbon dioxide concentration detected by the second carbon dioxide concentration sensor will increase. When there is an oxidizing atmosphere in the heating chamber, post-combustion cannot possibly occur, and the carbon dioxide concentrations detected by the two carbon dioxide concentration sensors are approximately equal.

If a reducing atmosphere in the heating chamber needs to be adjusted to a neutral atmosphere, the input of fuel can be reduced or the input of oxygen-containing gas can be increased, so that the amount of oxygen in the heating chamber is sufficient for complete combustion with fuel and other carbon-containing impurities. Conversely, if an oxidizing atmosphere in the heating chamber needs to be adjusted to a neutral atmosphere, the input of fuel can be increased or the input of oxygen-containing gas can be reduced.

Unless stated otherwise, qualifiers similar to "first" and "second" appearing herein do not indicate a definition of chronological order, quantity or importance, but are merely intended to distinguish one technical feature in this technical solution from another technical feature. Similarly, qualifiers similar to "a" appearing herein do not indicate a definition of quantity, but describe a technical feature that has not appeared in the preceding text. Similarly, modifiers similar to "about" and "approximately" appearing in front of numerals herein generally include the number itself, and the specific meaning thereof should be understood in conjunction with the meaning of the context. Similarly, unless modified by a specific quantity measure word, nouns herein should be regarded as including both singular and plural forms, i.e. the technical solution may include a single one of the technical feature concerned, but may also include a plurality of the technical feature.

The above are merely preferred particular embodiments of the present invention, which are merely intended to illustrate the technical solution of the present invention without limiting the present invention. All technical solutions obtainable by those skilled in the art according to the concept of the present invention by logical analysis, reasoning or limited experiment should be included in the scope of the present invention as defined by the claims.

## Claims

1. An apparatus capable of real-time monitoring and adjustment of combustion conditions in a furnace, **characterized by** comprising:
a) the furnace having a heating chamber (1), a burner (2), a loading gate (3), an exhaust gas stream port (4) and an exhaust gas stream duct (5), wherein the burner (2) is suitable for introducing a fuel and/or an oxygen-containing gas into the heating chamber (1) so as to form a flame, the loading gate (3) is suitable for adding a raw material, and the exhaust gas stream port (4) and the exhaust gas stream duct (5) are suitable for a gas produced by combustion in the heating chamber (1) to enter the exhaust gas stream duct (5) via the exhaust gas stream port (4);
b) two sensors (20, 21) of the same type arranged at different positions in the exhaust gas stream duct (5), a first sensor (20) being arranged close to the exhaust gas stream port (4), a second sensor (21) being arranged downstream of the first sensor, and the difference between the two sensor signals being able to be used to estimate an atmosphere state in the heating chamber (1) and/or whether post-combustion occurs in the exhaust gas stream duct (5); and
c) a control device (30), for receiving signals of the two sensors (20, 21), and adjusting the amount of fuel and/or oxygen-containing gas entering the burner (2) according to the difference between the signals
**characterized:**
• **in that** both sensors (20, 21) are flame sensors or
• **in that** both sensors (20, 21) are pressure sensors or
• **in that** both sensors (20, 21) are oxygen concentration sensors or
• **in that** both sensors (20, 21) are carbon monoxide concentration sensors or
• **in that** both sensors (20, 21) are carbon dioxide concentration sensors;
and **in that** the second sensor (21) is arranged 5 - 10 meters downstream of the first sensor (20).

2. The apparatus as claimed in claim 1, **characterized in that** the exhaust gas stream port (4) is located on a chamber wall of the heating chamber (1), and a gap exists between the exhaust gas stream port (4) and the exhaust gas stream duct (5).

3. The apparatus as claimed in claim 1, **characterized in that** the exhaust gas stream duct (5) is built of a refractory material by masonry, and air can enter the exhaust gas stream duct (5) through gaps in the refractory material.

4. A method for heating a raw material in the apparatus as claimed in any one of claims 1 to 3, **characterized by** comprising:
a) introducing a fuel and/or an oxygen-containing gas into the heating chamber (1) of the furnace via the burner (2), thereby forming a flame to heat the raw material, wherein a gas produced by combustion enters the exhaust gas stream duct (5) via the exhaust gas stream port (4);
b) introducing air into the exhaust gas stream duct (5);
c) transmitting signals of the two sensors (20, 21) to a control device (30), which adjusts the amount of fuel and/or oxygen-containing gas entering the burner (2) according to the difference between the two sensor signals.

5. The method as claimed in claim 4, **characterized in that** air enters the exhaust gas stream duct (5) through a gap between the exhaust gas stream port (4) and the exhaust gas stream duct (5).

6. The method as claimed in claim 4, **characterized in that** the exhaust gas stream duct (5) is built of a refractory material by masonry and air enters the exhaust gas stream duct (5) through gaps in the refractory material.

7. The method as claimed in claim 4, **characterized in that** the raw material comprises any of iron-containing, copper-containing, aluminum-containing or other-metal-containing materials and/or any mixture thereof.

8. The method as claimed in claim 4, **characterized in that** the raw material comprises waste.

9. The method as claimed in claim 4, **characterized in that** the oxygen-containing gas contains at least 80% oxygen by mole percent.

10. The method as claimed in claim 4, **characterized in that** the fuel comprises any of natural gas, other hydrocarbons, petroleum coke and/or any mixture thereof.

11. The method as claimed in claim 4, **characterized in that** the furnace comprises a rotary furnace, a reverberatory furnace and/or a shaft furnace.

12. The method as claimed in claim 4, **characterized in that** the combustion conditions in the furnace comprise:
a) a reducing atmosphere when the actual content of oxygen in the furnace is less than the oxygen content theoretically required to achieve full combustion of combustible carbon-containing compounds in the furnace; or
b) a neutral atmosphere when the actual content of oxygen in the furnace is approximately equal to the oxygen content theoretically required to achieve full combustion of combustible carbon-containing compounds in the furnace; or
c) an oxidizing atmosphere when the actual content of oxygen in the furnace is higher than the oxygen content theoretically required to achieve full combustion of combustible carbon-containing compounds in the furnace.

13. The method as claimed in claim 12, **characterized in that**:
• when both sensors (20, 21) are flame sensors:
a) if both flame sensors (20, 21) detect a flame, it is inferred that the atmosphere in the furnace is a reducing atmosphere;
b) if the first flame sensor (20) close to the exhaust gas stream port (4) detects a flame at regular time intervals, but the second flame sensor (21) remote from the exhaust gas stream port (4) does not detect a flame, it is inferred that the atmosphere in the furnace is a neutral atmosphere; or
c) if neither of the two flame sensors (20, 21) detects a flame, it is inferred that the atmosphere in the furnace is an oxidizing atmosphere;
• when both sensors (20, 21) are pressure sensors:
a) if the pressure detected by the first pressure sensor (20) close to the exhaust gas stream port (4) is approximately equal to the pressure detected by the second pressure sensor (21) remote from the exhaust gas stream port (4), it is inferred that the atmosphere in the furnace is a neutral or oxidizing atmosphere; or
b) if the pressure detected by the first pressure sensor (20) close to the exhaust gas stream port (4) is lower than the pressure detected by the second pressure sensor (21) remote from the exhaust gas stream port (4), it is inferred that the atmosphere in the furnace is a reducing atmosphere;
• when both sensors (20, 21) are oxygen concentration sensors:
a) if the oxygen concentration detected by the first oxygen concentration sensor (20) close to the exhaust gas stream port (4) is lower than a theoretical value for a neutral atmosphere but higher than the oxygen concentration detected by the second oxygen concentration sensor (21) remote from the exhaust gas stream port (4), it is inferred that the atmosphere in the furnace is a reducing atmosphere;
b) if the oxygen concentration detected by the first oxygen concentration sensor (20) close to the exhaust gas stream port (4) is equal to the theoretical value for a neutral atmosphere, and slightly higher than the oxygen concentration detected by the second oxygen concentration sensor (21) remote from the exhaust gas stream port (4), it is inferred that the atmosphere in the furnace is a neutral atmosphere and post-combustion occurs between the two oxygen concentration sensors (20, 21); or
c) if the oxygen concentrations detected by the two oxygen concentration sensors (20, 21) are both higher than the theoretical value for a neutral atmosphere, it is inferred that the atmosphere in the furnace is an oxidizing atmosphere;
• when both sensors (20, 21) are carbon monoxide concentration sensors:
a) if the carbon monoxide concentration detected by the first carbon monoxide concentration sensor (20) close to the exhaust gas stream port (4) is higher than the carbon monoxide concentration detected by the second carbon monoxide concentration sensor (21) remote from the exhaust gas stream port (4), it is inferred that the atmosphere in the furnace is a reducing atmosphere;
b) if the carbon monoxide concentration detected by the first carbon monoxide concentration sensor (20) close to the exhaust gas stream port (4) is equal to a theoretical value for a neutral atmosphere, and slightly higher than the carbon monoxide concentration detected by the second carbon monoxide concentration sensor (21) remote from the exhaust gas stream port (4), it is inferred that the atmosphere in the furnace is a neutral atmosphere and post-combustion occurs between the two carbon monoxide concentration sensors (20, 21); or
c) if both carbon monoxide concentration sensors (20, 21) detect almost no carbon monoxide, it is inferred that the atmosphere in the furnace is an oxidizing atmosphere;
• when both sensors (20, 21) are carbon dioxide concentration sensors:
a) if the carbon dioxide concentration detected by the first carbon dioxide concentration sensor (20) close to the exhaust gas stream port (4) is lower than the carbon dioxide concentration detected by the second carbon dioxide concentration sensor (21) remote from the exhaust gas stream port (4), it is inferred that the atmosphere in the furnace is a reducing atmosphere;
b) if the carbon dioxide concentration detected by the first carbon dioxide concentration sensor (20) close to the exhaust gas stream port (4) is equal to a theoretical value for a neutral atmosphere, and slightly lower than the carbon dioxide concentration detected by the second carbon dioxide concentration sensor (21) remote from the exhaust gas stream port (4), it is inferred that the atmosphere in the furnace is a neutral atmosphere and post-combustion occurs between the two carbon dioxide concentration sensors (20, 21); or
c) if the carbon dioxide concentrations detected by the two carbon dioxide concentration sensors (20, 21) are approximately equal, it is inferred that the atmosphere in the furnace is an oxidizing atmosphere.

14. The method as claimed in claim 12 or 13, **characterized in that** the control device (30) realizes an ideal atmosphere in the heating chamber (1) by adjusting the amount of fuel and/or oxygen-containing gas entering the burner (2), according to the inferred atmosphere state in the heating chamber (1) and/or whether post-combustion occurs in the exhaust gas stream duct (5).

## Patentansprüche

1. Vorrichtung zur Echtzeitüberwachung und -einstellung von Verbrennungsbedingungen in einem Ofen, **gekennzeichnet durch** Folgendes:
a) der Ofen mit einer Heizkammer (1), einem Brenner (2), einer Beschickungstür (3), einer Abgasstromöffnung (4) und einem Abgasstromkanal (5), wobei der Brenner (2) geeignet ist, einen Brennstoff und/oder ein sauerstoffhaltiges Gas in die Heizkammer (1) einzuleiten, um eine Flamme zu bilden, die Beschickungstür (3) geeignet ist, ein Rohmaterial hinzuzufügen, und die Abgasstromöffnung (4) und der Abgasstromkanal (5) geeignet sind, damit ein **durch** Verbrennung in der Heizkammer (1) erzeugtes Gas über die Abgasstromöffnung (4) in den Abgasstromkanal (5) gelangt;
b) zwei Sensoren (20, 21) desselben Typs, die an verschiedenen Positionen im Abgasstromkanal (5) angeordnet sind, wobei ein erster Sensor (20) nahe der Abgasstromöffnung (4) angeordnet ist, ein zweiter Sensor (21) stromabwärts des ersten Sensors angeordnet ist, und die Differenz zwischen den beiden Sensorsignalen verwendet werden kann, um einen Atmosphärenzustand in der Heizkammer (1) und/oder das Auftreten von Nachverbrennung im Abgasstromkanal (5) abzuschätzen; und
c) eine Steuervorrichtung (30) zum Empfangen von Signalen der beiden Sensoren (20, 21) und zum Einstellen der Menge an Brennstoff und/oder sauerstoffhaltigem Gas, die in den Brenner (2) gelangt, gemäß der Differenz zwischen den Signalen
**gekennzeichnet durch**:
• dass beide Sensoren (20, 21) Flammensensoren sind oder
• dass beide Sensoren (20, 21) Drucksensoren sind oder
• dass beide Sensoren (20, 21) Sauerstoffkonzentrationssensoren sind oder
• dass beide Sensoren (20, 21) Kohlenmonoxidkonzentrationssensoren sind oder
• dass beide Sensoren (20, 21) Kohlendioxidkonzentrationssensoren sind;
und **dadurch**, dass der zweite Sensor (21) 5 - 10 Meter stromabwärts des ersten Sensors (20) angeordnet ist.

2. Vorrichtung nach Anspruch 1, **dadurch gekennzeichnet, dass** die Abgasstromöffnung (4) an einer Kammerwand der Heizkammer (1) angeordnet ist und ein Spalt zwischen der Abgasstromöffnung (4) und dem Abgasstromkanal (5) besteht.

3. Vorrichtung nach Anspruch 1, **dadurch gekennzeichnet, dass** der Abgasstromkanal (5) aus einem feuerfesten Material gemauert ist und Luft durch Spalte im feuerfesten Material in den Abgasstromkanal (5) gelangen kann.

4. Verfahren zum Erhitzen eines Rohmaterials in der Vorrichtung nach einem der Ansprüche 1 bis 3, **gekennzeichnet durch**:
a) Einführen eines Brennstoffs und/oder eines sauerstoffhaltigen Gases in die Heizkammer (1) des Ofens über den Brenner (2), wodurch eine Flamme zur Erwärmung des Rohmaterials gebildet wird, wobei ein **durch** Verbrennung erzeugtes Gas über die Abgasstromöffnung (4) in den Abgasstromkanal (5) gelangt;
b) Einleiten von Luft in den Abgasstromkanal (5);
c) Übertragen von Signalen der beiden Sensoren (20, 21) an eine Steuervorrichtung (30), die die Menge an Brennstoff und/oder sauerstoffhaltigem Gas, die in den Brenner (2) gelangt, gemäß der Differenz zwischen den beiden Sensorsignalen einstellt.

5. Verfahren nach Anspruch 4, **dadurch gekennzeichnet, dass** Luft durch einen Spalt zwischen der Abgasstromöffnung (4) und dem Abgasstromkanal (5) in den Abgasstromkanal (5) gelangt.

6. Verfahren nach Anspruch 4, **dadurch gekennzeichnet, dass** der Abgasstromkanal (5) aus einem feuerfesten Material gemauert ist und Luft durch Spalte im feuerfesten Material in den Abgasstromkanal (5) gelangt.

7. Verfahren nach Anspruch 4, **dadurch gekennzeichnet, dass** das Rohmaterial Eisen-, Kupfer-, Aluminium- und/oder andere metallhaltige Materialien und/oder eine Mischung davon umfasst.

8. Verfahren nach Anspruch 4, **dadurch gekennzeichnet, dass** das Rohmaterial Abfall umfasst.

9. Verfahren nach Anspruch 4, **dadurch gekennzeichnet, dass** das sauerstoffhaltige Gas mindestens 80 Molprozent Sauerstoff enthält.

10. Verfahren nach Anspruch 4, **dadurch gekennzeichnet, dass** der Brennstoff Erdgas, andere Kohlenwasserstoffe und Petrolkoks und/oder eine Mischung davon umfasst.

11. Verfahren nach Anspruch 4, **dadurch gekennzeichnet, dass** der Ofen einen Drehrohrofen, einen Flammofen und/oder einen Schachtofen umfasst.

12. Verfahren nach Anspruch 4, **dadurch gekennzeichnet, dass** die Verbrennungsbedingungen im Ofen umfassen:
a) eine reduzierende Atmosphäre, wenn der tatsächliche Sauerstoffgehalt im Ofen geringer ist als der theoretisch für die vollständige Verbrennung von brennbaren kohlenstoffhaltigen Verbindungen im Ofen erforderliche Sauerstoffgehalt; oder
b) eine neutrale Atmosphäre, wenn der tatsächliche Sauerstoffgehalt im Ofen ungefähr gleich dem theoretisch für die vollständige Verbrennung von brennbaren kohlenstoffhaltigen Verbindungen im Ofen erforderlichen Sauerstoffgehalt ist; oder
c) eine oxidierende Atmosphäre, wenn der tatsächliche Sauerstoffgehalt im Ofen höher ist als der theoretisch für die vollständige Verbrennung von brennbaren kohlenstoffhaltigen Verbindungen im Ofen erforderliche Sauerstoffgehalt ist.

13. Verfahren nach Anspruch 12, **dadurch gekennzeichnet, dass**:
• wenn beide Sensoren (20, 21) Flammensensoren sind:
a) wenn beide Flammensensoren (20, 21) eine Flamme detektieren, wird daraus geschlossen, dass die Atmosphäre im Ofen eine reduzierende Atmosphäre ist;
b) wenn der erste Flammensensor (20) nahe der Abgasstromöffnung (4) in regelmäßigen Zeitintervallen eine Flamme detektiert, der zweite Flammensensor (21) jedoch entfernt von der Abgasstromöffnung (4) keine Flamme detektiert, wird daraus geschlossen, dass die Atmosphäre im Ofen eine neutrale Atmosphäre ist; oder
c) wenn keiner der beiden Flammensensoren (20, 21) eine Flamme detektiert, wird daraus geschlossen, dass die Atmosphäre im Ofen eine oxidierende Atmosphäre ist;
• wenn beide Sensoren (20, 21) Drucksensoren sind:
a) wenn der vom ersten Drucksensor (20) nahe der Abgasstromöffnung (4) detektierte Druck ungefähr gleich dem vom zweiten Drucksensor (21) entfernt von der Abgasstromöffnung (4) detektierten Druck ist, wird daraus geschlossen, dass die Atmosphäre im Ofen eine neutrale oder oxidierende Atmosphäre ist; oder
b) wenn der vom ersten Drucksensor (20) nahe der Abgasstromöffnung (4) detektierte Druck geringer ist als der vom zweiten Drucksensor (21) entfernt von der Abgasstromöffnung (4) detektierte Druck, wird daraus geschlossen, dass die Atmosphäre im Ofen eine reduzierende Atmosphäre ist;
• wenn beide Sensoren (20, 21) Sauerstoffkonzentrationssensoren sind:
a) wenn die vom ersten Sauerstoffkonzentrationssensor (20) nahe der Abgasstromöffnung (4) detektierte Sauerstoffkonzentration geringer ist als ein theoretischer Wert für eine neutrale Atmosphäre, aber höher ist als die vom zweiten Sauerstoffkonzentrationssensor (21) entfernt von der Abgasstromöffnung (4) detektierte Sauerstoffkonzentration, wird daraus geschlossen, dass die Atmosphäre im Ofen eine reduzierende Atmosphäre ist;
b) wenn die vom ersten Sauerstoffkonzentrationssensor (20) nahe der Abgasstromöffnung (4) detektierte Sauerstoffkonzentration gleich dem theoretischen Wert für eine neutrale Atmosphäre ist und geringfügig höher ist als die vom zweiten Sauerstoffkonzentrationssensor (21) entfernt von der Abgasstromöffnung (4) detektierte Sauerstoffkonzentration, wird daraus geschlossen, dass die Atmosphäre im Ofen eine neutrale Atmosphäre ist und eine Nachverbrennung zwischen den beiden Sauerstoffkonzentrationssensoren (20, 21) stattfindet; oder
c) wenn die von den beiden Sauerstoffkonzentrationssensoren (20, 21) detektierten Sauerstoffkonzentrationen beide höher sind als der theoretische Wert für eine neutrale Atmosphäre, wird daraus geschlossen, dass die Atmosphäre im Ofen eine oxidierende Atmosphäre ist;
• wenn beide Sensoren (20, 21) Kohlenmonoxidkonzentrationssensoren sind:
a) wenn die vom ersten Kohlenmonoxidkonzentrationssensor (20) nahe der Abgasstromöffnung (4) detektierte Kohlenmonoxidkonzentration höher ist als die vom zweiten Kohlenmonoxidkonzentrationssensor (21) entfernt von der Abgasstromöffnung (4) detektierte Kohlenmonoxidkonzentration, wird daraus geschlossen, dass die Atmosphäre im Ofen eine reduzierende Atmosphäre ist;
b) wenn die vom ersten Kohlenmonoxidkonzentrationssensor (20) nahe der Abgasstromöffnung (4) detektierte Kohlenmonoxidkonzentration gleich einem theoretischen Wert für eine neutrale Atmosphäre ist und geringfügig höher ist als die vom zweiten Kohlenmonoxidkonzentrationssensor (21) entfernt von der Abgasstromöffnung (4) detektierte Kohlenmonoxidkonzentration, wird daraus geschlossen, dass die Atmosphäre im Ofen eine neutrale Atmosphäre ist und eine Nachverbrennung zwischen den beiden Kohlenmonoxidkonzentrationssensoren (20, 21) stattfindet; oder
c) wenn beide Kohlenmonoxidkonzentrationssensoren (20, 21) fast kein Kohlenmonoxid detektieren, wird daraus geschlossen, dass die Atmosphäre im Ofen eine oxidierende Atmosphäre ist;
• wenn beide Sensoren (20, 21) Kohlendioxidkonzentrationssensoren sind:
a) wenn die vom ersten Kohlendioxidkonzentrationssensor (20) nahe der Abgasstromöffnung (4) detektierte Kohlendioxidkonzentration geringer ist als die vom zweiten Kohlendioxidkonzentrationssensor (21) entfernt von der Abgasstromöffnung (4) detektierte Kohlendioxidkonzentration, wird daraus geschlossen, dass die Atmosphäre im Ofen eine reduzierende Atmosphäre ist;
b) wenn die vom ersten Kohlendioxidkonzentrationssensor (20) nahe der Abgasstromöffnung (4) detektierte Kohlendioxidkonzentration gleich einem theoretischen Wert für eine neutrale Atmosphäre ist und geringfügig geringer ist als die vom zweiten Kohlendioxidkonzentrationssensor (21) entfernt von der Abgasstromöffnung (4) detektierte Kohlendioxidkonzentration, wird daraus geschlossen, dass die Atmosphäre im Ofen eine neutrale Atmosphäre ist und eine Nachverbrennung zwischen den beiden Kohlendioxidkonzentrationssensoren (20, 21) stattfindet; oder
c) wenn die von den beiden Kohlendioxidkonzentrationssensoren (20, 21) detektierten Kohlendioxidkonzentrationen ungefähr gleich sind, wird daraus geschlossen, dass die Atmosphäre im Ofen eine oxidierende Atmosphäre ist.

14. Verfahren nach Anspruch 12 oder 13, **dadurch gekennzeichnet, dass** die Steuervorrichtung (30) eine ideale Atmosphäre in der Heizkammer (1) realisiert, indem sie die Menge an Brennstoff und/oder sauerstoffhaltigem Gas, die in den Brenner (2) gelangt, gemäß dem geschlussfolgerten Atmosphärenzustand in der Heizkammer (1) und/oder dem Auftreten von Nachverbrennung im Abgasstromkanal (5) einstellt.

## Revendications

1. Appareil capable de surveiller et d'ajuster en temps réel les conditions de combustion dans un four, **caractérisé en ce qu'**il comprend :
a) le four ayant une chambre de chauffage (1), un brûleur (2), une porte de chargement (3), un orifice de flux de gaz d'échappement (4) et un conduit de flux de gaz d'échappement (5), le brûleur (2) étant adapté pour introduire un combustible et/ou un gaz contenant de l'oxygène dans la chambre de chauffage (1) de manière à former une flamme, la porte de chargement (3) étant adaptée pour ajouter une matière première, et l'orifice de flux de gaz d'échappement (4) et le conduit de flux de gaz d'échappement (5) étant adaptés pour qu'un gaz produit par la combustion dans la chambre de chauffage (1) entre dans le conduit de flux de gaz d'échappement (5) via l'orifice de flux de gaz d'échappement (4) ;
b) deux capteurs (20, 21) du même type agencés à différentes positions dans le conduit de flux de gaz d'échappement (5), un premier capteur (20) étant agencé près de l'orifice de flux de gaz d'échappement (4), un second capteur (21) étant agencé en aval du premier capteur, et la différence entre les signaux des deux capteurs pouvant être utilisée pour estimer un état d'atmosphère dans la chambre de chauffage (1) et/ou si une post-combustion se produit dans le conduit de flux de gaz d'échappement (5) ; et
c) un dispositif de commande (30), pour recevoir les signaux des deux capteurs (20, 21), et ajuster la quantité de combustible et/ou de gaz contenant de l'oxygène entrant dans le brûleur (2) en fonction de la différence entre les signaux
**caractérisé :**
• **en ce que** les deux capteurs (20, 21) sont des capteurs de flamme ou
• **en ce que** les deux capteurs (20, 21) sont des capteurs de pression ou
• **en ce que** les deux capteurs (20, 21) sont des capteurs de concentration d'oxygène ou
• **en ce que** les deux capteurs (20, 21) sont des capteurs de concentration de monoxyde de carbone ou
• **en ce que** les deux capteurs (20, 21) sont des capteurs de concentration de dioxyde de carbone ;
et **en ce que** le second capteur (21) est agencé à 5 - 10 mètres en aval du premier capteur (20).

2. Appareil selon la revendication 1, **caractérisé en ce que** l'orifice de flux de gaz d'échappement (4) est situé sur une paroi de chambre de la chambre de chauffage (1), et un espace existe entre l'orifice de flux de gaz d'échappement (4) et le conduit de flux de gaz d'échappement (5).

3. Appareil selon la revendication 1, **caractérisé en ce que** le conduit de flux de gaz d'échappement (5) est construit en matériau réfractaire par maçonnerie, et de l'air peut entrer dans le conduit de flux de gaz d'échappement (5) par des espaces dans le matériau réfractaire.

4. Procédé pour chauffer une matière première dans l'appareil selon l'une quelconque des revendications 1 à 3, **caractérisé en ce qu'**il comprend :
a) l'introduction d'un combustible et/ou d'un gaz contenant de l'oxygène dans la chambre de chauffage (1) du four via le brûleur (2), formant ainsi une flamme pour chauffer la matière première, où un gaz produit par la combustion entre dans le conduit de flux de gaz d'échappement (5) via l'orifice de flux de gaz d'échappement (4) ;
b) l'introduction d'air dans le conduit de flux de gaz d'échappement (5) ;
c) la transmission de signaux des deux capteurs (20, 21) à un dispositif de commande (30), qui ajuste la quantité de combustible et/ou de gaz contenant de l'oxygène entrant dans le brûleur (2) en fonction de la différence entre les deux signaux.

5. Procédé selon la revendication 4, **caractérisé en ce que** l'air entre dans le conduit de flux de gaz d'échappement (5) par un espace entre l'orifice de flux de gaz d'échappement (4) et le conduit de flux de gaz d'échappement (5).

6. Procédé selon la revendication 4, **caractérisé en ce que** le conduit de flux de gaz d'échappement (5) est construit en matériau réfractaire par maçonnerie et que de l'air entre dans le conduit de flux de gaz d'échappement (5) par des espaces dans le matériau réfractaire.

7. Procédé selon la revendication 4, **caractérisé en ce que** la matière première comprend l'un quelconque de, et/ou un mélange de plus d'un de, matériaux contenant du fer, contenant du cuivre, contenant de l'aluminium ou d'autres matériaux contenant des métaux et/ou tout mélange de ceux-ci.

8. Procédé selon la revendication 4, **caractérisé en ce que** la matière première comprend des déchets.

9. Procédé selon la revendication 4, **caractérisé en ce que** le gaz contenant de l'oxygène contient au moins 80 % d'oxygène en moles.

10. Procédé selon la revendication 4, **caractérisé en ce que** le combustible comprend l'un quelconque de, ou un mélange de plus d'un de, gaz naturel, autres hydrocarbures et coke de pétrole.

11. Procédé selon la revendication 4, **caractérisé en ce que** le four comprend un four rotatif, un four à réverbère et/ou un four à arbre.

12. Procédé selon la revendication 4, **caractérisé en ce que** les conditions de combustion dans le four comprennent :
a) une atmosphère réductrice lorsque la teneur réelle en oxygène dans le four est inférieure à la teneur en oxygène théoriquement requise pour une combustion complète des composés combustibles contenant du carbone dans le four ; ou
b) une atmosphère neutre lorsque la teneur réelle en oxygène dans le four est approximativement égale à la teneur en oxygène théoriquement requise pour une combustion complète des composés combustibles contenant du carbone dans le four ; ou
c) une atmosphère oxydante lorsque la teneur réelle en oxygène dans le four est supérieure à la teneur en oxygène théoriquement requise pour une combustion complète des composés combustibles contenant du carbone dans le four.

13. Procédé selon la revendication 12, **caractérisé en ce que** :
• lorsque les deux capteurs (20, 21) sont des capteurs de flamme
a) si les deux capteurs de flamme (20, 21) détectent une flamme, il est déduit que l'atmosphère dans le four est une atmosphère réductrice ;
b) si le premier capteur de flamme (20) près de l'orifice de flux de gaz d'échappement (4) détecte une flamme à intervalles réguliers, mais que le second capteur de flamme (21) éloigné de l'orifice de flux de gaz d'échappement (4) ne détecte pas de flamme, il est déduit que l'atmosphère dans le four est une atmosphère neutre ; ou
c) si aucun des deux capteurs de flamme (20, 21) ne détecte de flamme, il est déduit que l'atmosphère dans le four est une atmosphère oxydante ;
• lorsque les deux capteurs (20, 21) sont des capteurs de pression :
a) si la pression détectée par le premier capteur de pression (20) près de l'orifice de flux de gaz d'échappement (4) est approximativement égale à la pression détectée par le second capteur de pression (21) éloigné de l'orifice de flux de gaz d'échappement (4), il est déduit que l'atmosphère dans le four est une atmosphère neutre ou oxydante ; ou
b) si la pression détectée par le premier capteur de pression (20) près de l'orifice de flux de gaz d'échappement (4) est inférieure à la pression détectée par le second capteur de pression (21) éloigné de l'orifice de flux de gaz d'échappement (4), il est déduit que l'atmosphère dans le four est une atmosphère réductrice ;
• lorsque les deux capteurs (20, 21) sont des capteurs de concentration d'oxygène :
a) si la concentration d'oxygène détectée par le premier capteur de concentration d'oxygène (20) près de l'orifice de flux de gaz d'échappement (4) est inférieure à une valeur théorique pour une atmosphère neutre mais supérieure à la concentration d'oxygène détectée par le second capteur de concentration d'oxygène (21) éloigné de l'orifice de flux de gaz d'échappement (4), il est déduit que l'atmosphère dans le four est une atmosphère réductrice ;
b) si la concentration d'oxygène détectée par le premier capteur de concentration d'oxygène (20) près de l'orifice de flux de gaz d'échappement (4) est égale à la valeur théorique pour une atmosphère neutre, et légèrement supérieure à la concentration d'oxygène détectée par le second capteur de concentration d'oxygène (21) éloigné de l'orifice de flux de gaz d'échappement (4), il est déduit que l'atmosphère dans le four est une atmosphère neutre et qu'une post-combustion se produit entre les deux capteurs de concentration d'oxygène (20, 21) ; ou
c) si les concentrations d'oxygène détectées par les deux capteurs de concentration d'oxygène (20, 21) sont toutes deux supérieures à la valeur théorique pour une atmosphère neutre, il est déduit que l'atmosphère dans le four est une atmosphère oxydante ;
• lorsque les deux capteurs (20, 21) sont des capteurs de concentration de monoxyde de carbone :
a) si la concentration de monoxyde de carbone détectée par le premier capteur de concentration de monoxyde de carbone (20) près de l'orifice de flux de gaz d'échappement (4) est supérieure à la concentration de monoxyde de carbone détectée par le second capteur de concentration de monoxyde de carbone (21) éloigné de l'orifice de flux de gaz d'échappement (4), il est déduit que l'atmosphère dans le four est une atmosphère réductrice ;
b) si la concentration de monoxyde de carbone détectée par le premier capteur de concentration de monoxyde de carbone (20) près de l'orifice de flux de gaz d'échappement (4) est égale à une valeur théorique pour une atmosphère neutre, et légèrement supérieure à la concentration de monoxyde de carbone détectée par le second capteur de concentration de monoxyde de carbone (21) éloigné de l'orifice de flux de gaz d'échappement (4), il est déduit que l'atmosphère dans le four est une atmosphère neutre et qu'une post-combustion se produit entre les deux capteurs de concentration de monoxyde de carbone (20, 21) ; ou
c) si les deux capteurs de concentration de monoxyde de carbone (20, 21) détectent presque pas de monoxyde de carbone, il est déduit que l'atmosphère dans le four est une atmosphère oxydante ;
• lorsque les deux capteurs (20, 21) sont des capteurs de concentration de dioxyde de carbone :
a) si la concentration de dioxyde de carbone détectée par le premier capteur de concentration de dioxyde de carbone (20) près de l'orifice de flux de gaz d'échappement (4) est inférieure à la concentration de dioxyde de carbone détectée par le second capteur de concentration de dioxyde de carbone (21) éloigné de l'orifice de flux de gaz d'échappement (4), il est déduit que l'atmosphère dans le four est une atmosphère réductrice ;
b) si la concentration de dioxyde de carbone détectée par le premier capteur de concentration de dioxyde de carbone (20) près de l'orifice de flux de gaz d'échappement (4) est égale à une valeur théorique pour une atmosphère neutre, et légèrement inférieure à la concentration de dioxyde de carbone détectée par le second capteur de concentration de dioxyde de carbone (21) éloigné de l'orifice de flux de gaz d'échappement (4), il est déduit que l'atmosphère dans le four est une atmosphère neutre et qu'une post-combustion se produit entre les deux capteurs de concentration de dioxyde de carbone (20, 21) ; ou
c) si les concentrations de dioxyde de carbone détectées par les deux capteurs de concentration de dioxyde de carbone (20, 21) sont approximativement égales, il est déduit que l'atmosphère dans le four est une atmosphère oxydante.

14. Procédé selon la revendication 12 ou 13, **caractérisé en ce que** le dispositif de commande (30) réalise une atmosphère idéale dans la chambre de chauffage (1) en ajustant la quantité de combustible et/ou de gaz contenant de l'oxygène entrant dans le brûleur (2), en fonction de l'état d'atmosphère déduit dans la chambre de chauffage (1) et/ou si une post-combustion se produit dans le conduit de flux de gaz d'échappement (5).
